(19) Europäisches Patentamt
European Patent Office
Office européen des brevets

(11) **EP 3 343 679 B1**

(12) **EUROPEAN PATENT SPECIFICATION**

(45) Date of publication and mention
of the grant of the patent:
**25.03.2020 Bulletin 2020/13**

(51) Int Cl.:
*H01M 4/587* (2010.01)   *H01M 10/054* (2010.01)
*C01B 32/318* (2017.01)

(21) Application number: **16851320.8**

(22) Date of filing: **21.09.2016**

(86) International application number:
**PCT/JP2016/077882**

(87) International publication number:
**WO 2017/057146 (06.04.2017 Gazette 2017/14)**

(54) **CARBONACEOUS MATERIAL FOR SODIUM-ION SECONDARY BATTERY NEGATIVE ELECTRODE, NEGATIVE ELECTRODE COMPRISING THE SAME AND SODIUM-ION SECONDARY BATTERY COMPRISING SAID ELECTRODE**

KOHLENSTOFFMATERIAL FÜR NEGATIVELEKTRODEN EINER NATRIUMIONEN-SEKUNDÄRBATTERIE, NEGATIVELEKTRODE MIT DIESEM KOHLENSTOFFMATERIAL UND NATRIUMIONEN-SEKUNDÄRBATTERIE MIT DIESER NEGATIVELEKTRODE

MATÉRIAU CARBONÉ POUR ÉLECTRODE NÉGATIVE DE BATTERIE RECHARGEABLE SODIUM-ION, ÉLECTRODE NÉGATIVE LE COMPRENANT ET BATTERIE RECHARGEABLE SODIUM-ION COMPRENANT CETTE ÉLECTRODE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2015 JP 2015194726**

(43) Date of publication of application:
**04.07.2018 Bulletin 2018/27**

(73) Proprietor: **KURARAY CO., LTD.**
**Okayama 710-0801 (JP)**

(72) Inventors:
 • **KOBAYASHI, Shota**
  **Tokyo 103-8552 (JP)**
 • **KOBAYASHI, Tetsuhiro**
  **Tokyo 103-8552 (JP)**
 • **TADA, Yasuhiro**
  **Tokyo 103-8552 (JP)**

(74) Representative: **Müller-Boré & Partner**
**Patentanwälte PartG mbB**
**Friedenheimer Brücke 21**
**80639 München (DE)**

(56) References cited:
 **EP-A1- 2 306 561   WO-A1-2014/034857**
 WO-A1-2014/038491   WO-A1-2014/038494
 JP-A- 2006 114 507   JP-A- 2010 251 283

 • **NING SUN ET AL: "Facile synthesis of high performance hard carbon anode materials for sodium ion batteries", JOURNAL OF MATERIALS CHEMISTRY A, vol. 3, no. 41, 1 January 2015 (2015-01-01), pages 20560-20566, XP055489247, GB ISSN: 2050-7488, DOI: 10.1039/C5TA05118E**
 • **LOTFABAD E M ET AL: "High-density sodium and lithium ion battery anodes from banana peels", ACS NANO 20140722 AMERICAN CHEMICAL SOCIETY USA, vol. 8, no. 7, 22 July 2014 (2014-07-22), pages 7115-7129, XP002782743, DOI: 10.1021/NN502045Y**
 • **DING J ET AL: "Carbon nanosheet frameworks derived from peat moss as high performance sodium ion battery anodes", ACS NANO 20131223 AMERICAN CHEMICAL SOCIETY USA, vol. 7, no. 12, 23 December 2013 (2013-12-23), pages 11004-11015, XP002782744, DOI: 10.1021/NN404640C**
 • **GUIYIN XU ET AL: "Biomass-derived porous carbon materials with sulfur and nitrogen dual-doping for energy storage", GREEN CHEMISTRY, vol. 17, no. 3, 1 January 2015 (2015-01-01), pages 1668-1674, XP055489408, GB ISSN: 1463-9262, DOI: 10.1039/C4GC02185A**

- **KUN-LEI HONG ET AL: "Biomass derived hard carbon used as a high performance anode material for sodium ion batteries", JOURNAL OF MATERIALS CHEMISTRY A, vol. 2, no. 32, 26 June 2014 (2014-06-26), page 12733, XP055489232, GB ISSN: 2050-7488, DOI: 10.1039/C4TA02068E**

- **WEI LUO ET AL: "Carbon nanofibers derived from cellulose nanofibers as a long-life anode material for rechargeable sodium-ion batteries", JOURNAL OF MATERIALS CHEMISTRY A, vol. 1, no. 36, 1 January 2013 (2013-01-01), page 10662, XP055489476, GB ISSN: 2050-7488, DOI: 10.1039/c3ta12389h**

**Description**

The present invention relates to a carbonaceous material for a sodium ion secondary battery negative electrode, and to a secondary battery using the same. According to the present invention, it is possible to provide a sodium ion secondary battery having a high discharge capacity, excellent cycling characteristics, and excellent storage characteristics.

Currently, as mobile batteries, lithium ion secondary batteries (LIB) are receiving attention. However, as the demand for LIB's increases, the depletion of lithium, and steep rises in price of rare metals such as cobalt, nickel, lithium and the like are expected. In such circumstances, sodium ion secondary batteries (SIB) which use sodium for which resources are abundant has received attention as a successor to SIB. The basic constitution of sodium ion batteries resembles that of lithium ion batteries, but they differ in the point that sodium is used instead of lithium as the charge carrier. Because of this, sodium ion secondary batteries have different chemical characteristics than lithium ion secondary batteries. In order for sodium ion secondary batteries to be used as batteries for automobiles, or large scale electric sources for stationary devices, they must be batteries having high discharge capacity, excellent cycling characteristics, and excellent storage characteristics. In order to have a high discharge capacity, a negative electrode which can electrically insert (dope) and eliminate (de-dope) a large amount of sodium negative electrode is necessary. Further, because it is a secondary battery, a negative electrode which can endure repeated doping and de-doping, and has excellent cycling characteristics is necessary. Further, for stationary applications, the battery must be held in a charged state to provide power supply during emergencies. Accordingly, a negative electrode which can hold its capacity with a high maintenance factor after holding a full charge is required. In particular, excellent storage characteristics at high temperatures are demanded.

It is known that when graphite, which is a negative electrode material for LIB's, is used as an SIB negative electrode material, a sufficient electrical response is not shown. Among intercalation reactions of alkali metal ions to graphite, only Na ions differ from the others, and display a specific behavior.

Patent Document 1: Japanese Unexamined Patent Application, Publication No. 2007-35588
Patent Document 2: Japanese Unexamined Patent Application, Publication No. 2010-251283
Patent Document 3: Japanese Unexamined Patent Application, Publication No. 2009-129741
Patent Document 4: Japanese Unexamined Patent Application, Publication No. 2015-50050

Ding, J. et al. describe carbon nanosheet frameworks derived from peat moss as high performance sodium ion battery anodes (in ACS Nano, 2013, Vol. 7, No. 12, pp. 11004-11015).

Patent Document 1 discloses a secondary battery using, as a negative electrode, a non-graphitic carbonaceous material wherein $d_{002}$ is 0.377 nm or more, and the size of Lc is 1.29 nm or less. However, the initial discharge capacity density was 234 mAh/g, which is small. In Patent Document 2, as a negative electrode material, a carbonaceous material prepared with plants a raw material is used. However, the initial discharge capacity was 223 mAh/g which is low. Patent Document 3 discloses a secondary battery using a glassy carbon as the negative electrode material. However, the discharge capacity was 265 mAh/g which is small. Cited Publication 4 discloses a secondary batter using a carbonaceous material where the ratio pp/pH is less than 0.950 as a negative electrode material. However, the negative electrode capacity per unit mass was 230 mAh/g. Thus, non-graphitic carbonaceous materials as alternative negative electrode materials have been researched, but the discharge capacity of sodium secondary batteries using non-graphitic carbonaceous materials reported so far are on the order of 200 to 260 mAh/g, and cannot be said to have sufficient capacity. Accordingly, the objective of the present invention is to provide a sodium ion secondary battery having a high discharge capacity, and excellent cycling characteristics, and storage characteristics. Further, the objective of the present invention is to provide a carbonaceous material for a secondary battery negative electrode used in the above battery.

The present inventors, as a result of diligent research concerning sodium ion secondary batteries having a high discharge capacity, and excellent cycling characteristics, and storage characteristics, made the surprising discovery that by using a carbonaceous material derived from a plant carbon source, and having a BET specific surface area of 100 m²/g or less, it is possible to obtain a sodium ion secondary battery displaying excellent discharge capacity, cycling characteristics, and storage characteristics. The present invention is based on the following observations.

Accordingly, the present invention relates to

[1] a carbonaceous material for a sodium ion secondary battery negative electrode characterized in that the carbonaceous material is derived from a plant as a carbon source, has a BET specific surface area of 100 m²/g or less, and has a true density determined by the butanol method that is less than 1.53 g/cm³, the plant is at least one plant selected from the group consisting of coconut shells, coffee beans, tea leaves, sugar cane, straw, broad leaf trees, conifers, bamboo, and rice husks, and the ratio H/C of hydrogen atoms to carbon atoms determined by elemental analysis is 0.03 or less,
[2] a negative electrode for a sodium ion secondary battery comprising a carbonaceous material according to [1],
[3] a sodium ion secondary battery comprising an electrode according to [2].

A sodium ion secondary battery using the carbonaceous material according to the present invention has a large discharge capacity, and further has excellent cycling characteristics, and storage characteristics.

[1] Carbonaceous material for a sodium ion secondary battery negative electrode

The carbonaceous material for a sodium ion secondary battery negative electrode is a carbonaceous material derived from a plant carbon source, and having a BET specific surface area of 100 $m^2/g$ or less. Further, it has a true density determined by the butanol method of less than 1.53 $g/cm^3$. Furthermore, a ratio H/C of hydrogen atoms to carbon atoms determined by elemental analysis is 0.03 or less.

<Carbon Source>

The carbon source of the carbonaceous material for a sodium ion secondary battery negative electrode of the present invention is plant-derived. The plant which is the carbon source is at least one plant selected from the group consisting of coconut shells, coffee beans, tea leaves, sugar cane, straw, broad leaf trees, conifers, bamboo, or rice husks. These plants may be used singly, or in combinations of 2 or more, but because they are available in large quantities, coconut shells and coffee beans are preferable. The palm tree for the source of the coconut shells is not particularly limited, but palms (oil palms), coconut palms, salak, or sea coconuts may be mentioned. The coconut shells obtained from these palms may be used singly or in combination, and coconut shells derived from coconut trees or palm trees which are utilized as foods, detergent raw materials, biodiesel oil raw materials and the like and generate large amounts of biomass waste are preferable. As the carbon source using the coffee beans, extraction residue from which a coffee beverage component has been extracted from the coffee beans is preferable. The extraction residue has a part of the mineral components have been extracted and eliminated when extracting the coffee component, and among these, coffee extraction residue which has been industrially extraction processed has been suitable crushed and further is available in large quantities and is therefore preferable.

<Specific Surface Area>

The specific surface area can be determined from an approximation derived from the BET formula by nitrogen absorption. The specific surface area of the carbonaceous material of the present invention is 100 $m^2/g$ or less, and more preferably 50 $m^2/g$ or less. If the specific surface area exceeds 100 $m^2/g$, reaction with the electrolyte increases, and is connected with an irreversible increase in the capacity, and accordingly the battery performance decreases. Further, the capacity reduction (storage characteristics) when held at high temperatures at full charge becomes large. Further, when the specific surface area is 100 $m^2/g$ or less, the pores which do not contribute to storage of sodium are reduced, and pores of the size which can store sodium are increased, and it is possible to display excellent discharge capacity. The lower limit of the specific surface area is not particularly limited, but if the specific surface area is less than 0.5 $m^2/g$, there is the possibility that the input and output characteristics are reduced. Accordingly, the lower limit of the specific surface area is preferably 0.5 $m^2/g$.

<Butanol True Density>

The butanol true density of the carbonaceous material of the present invention is less than 1.53 $g/cm^3$. The upper limit of the butanol true density is preferably 1.52 $g/cm^3$ or less, more preferably 1.51 $g/cm^3$ or less, and most preferably 1.50 $g/cm^3$ or less. If the true density of the carbonaceous material exceeds 1.53 $g/cm^3$, the pores which can contribute to storage of sodium are reduced, and the capacity for doping and de-doping may be reduced. The lower limit of the true density is preferably 1.35 $g/cm^3$ or more, and more preferably 1.39 $g/cm^3$ or more. A carbonaceous material with a true density of less than 1.53 $g/cm^3$, has many pores which can contribute to storage of sodium, and the capacity for doping and de-doping may be increased. Accordingly, by making the butanol true density in the above-mentioned range, a sodium ion secondary battery using carbonaceous material of the present invention can display a high discharge capacity.

(Atom Ratio of Hydrogen Atoms and Carbon Atoms (H/C))

H/C is measured by elemental analysis of hydrogen atoms and carbon atoms, and the higher the degree of carbonization, the smaller the hydrogen content of the carbonaceous material, and therefore there is a tendency for H/C to become small. Accordingly, H/C is an effective indicator showing the degree of carbonization. The H/C of the carbonaceous material of the present invention is 0.03 or less. If the ratio hydrogen atoms and carbon atoms H/C exceeds 0.05, many functional groups will be present at the carbonaceous material, the doped sodium at the negative electrode will not be fully de-doped due to reactions with sodium, and a large amount of sodium will remain in the negative electrode, and there is the problem that the sodium which is the active substance will be wastefully consumed, and this will also have a negative effect on the cycling characteristics. On the other hand, if the ratio hydrogen atoms and carbon atoms H/C is in the above range, it is possible to display excellent cycling characteristics.

(Helium True Density)

The helium true density of the carbonaceous material of the present invention is not particularly limited, and is preferably less than 2.20 g/cm$^3$. If the carbonaceous material has a helium true density exceeding 2.20 g/cm$^3$, pores which can store sodium will be reduced, and the capacity for doping and de-doping may be reduced. The lower limit of the helium true density is preferably 1.35 g/cm$^3$ or more, and more preferably 1.39 g/cm$^3$ or more.

<<Average Particle Diameter>>

The average particle diameter of the carbonaceous material of the present invention ($D_{v50}$) is 1 to 50 $\mu$m. The lower limit of the average particle diameter is preferably 1 $\mu$m or more, more preferably 1.5 $\mu$m or more, and particularly preferably 2.0 $\mu$m or more. If the average particle diameter is less than 1 $\mu$m, the fine powder is increased, whereby the specific surface area increases. Accordingly, the reactivity with the electrolyte becomes high, irreversible capacity which does not discharge even when charged increases, and the proportion of the capacity of the positive electrode which is wasted increases, which is not preferable. The upper limit of the average particle diameter is preferably 40 $\mu$m or less, and more preferably 35 $\mu$m or less. If the average particle diameter exceeds 50 $\mu$m, the dispersion free path of the sodium in the particles increases, whereby rapid charing and discharging becomes difficult. Further, in order to improve the input and output characteristics, a large electrode surface area is important, and therefore, when producing the electrode, it is essential to make the coating thickness of the active substance to the current collector thin. To make the coating thickness think, it is necessary to reduce the particle diameter of the active substance. From such a viewpoint, the upper limit of the average particle diameter is preferably 50 $\mu$m or less.

<<Content of Potassium Element>>

The potassium element content ratio of the carbonaceous matter of the anhydrous electrolyte material secondary battery electrode of the present invention does not have an upper limit, and is preferably 0.10 mass% or less, more preferably 0.05 mass% or less, and even more preferably 0.03 mass% or less. An anhydrous electrolyte secondary battery using a carbonaceous material with a potassium content exceeding 0.10 mass% will have a small de-doping capacity, and non-de-doping capacity will become large.

<<Production of the Carbonaceous Material for Sodium Ion Secondary Battery Negative Electrode>>

The carbonaceous material for sodium ion secondary battery negative electrode of the present invention is not particularly limited, and may be produced by a combination of a plurality of steps selected from the group consisting of a preparation step from char of plant raw materials, a liquid phase decalcification step, an alkali impregnation step, a gas phase decalcification step, a crushing step, a preliminary firing step, a main firing step, and a pyrolytic carbon coating step. For example, in Example 1 (Reference Example), the carbonaceous material was prepared by a preparation step of a char from a plant raw material, a gas phase decalcification step, a crushing step, and a main firing step. Or in Example 6, the carbonaceous material was prepared by a crushing step, a preparation step of char from a plant raw material, an alkali impregnation step, a preliminary firing step, a crushing step, and a main firing step. In Example 7, the carbonaceous material is prepared by a liquid phase decalcification step, a preparation step of a char from a plant raw material, a crushing step, an alkali impregnation step, a preliminary firing step, a main firing step, and a coating step.

(Liquid Phase Decalcification Step)

The liquid phase decalcification step is one which the plant-derived raw material, before de-tarring, is processed in an acidic solution with a pH of 3.0 or less. By this liquid phase decalcification, potassium element and calcium element and the like can be efficiently eliminated, and in particular when compared to the case of not using an acid, the calcium is efficiently eliminated. Further, it is also possible to eliminate other alkali metals, alkaline earth metals, and further transition metals such as copper or nickel. In the liquid phase decalcification step, a plant-derived raw material is preferably processed in an acidic solution with a pH of 3.0 or less from 0°C to less than 80°C. The acid used in the liquid phase decalcification is not particularly limited, and for example, strong acids such as hydrochloric acid, hydrofluoric acid, sulfuric acid, nitric acid and the like, or weak acids such as citric acid, acetic acid and the like, or compositions thereof may be mentioned, and hydrochloric acid, or hydrofluoric acid are preferable. The plant-derived raw material is preferably crude, and is preferably one which has not been thermally processed at least up to 500°C. The pH is not particularly limited provided that sufficient decalcification is achieved, and is preferably a pH or 3.0 or less, more preferably a pH of 2.5 or less, and even more preferably 2.0 or less. A pH exceeding 3.0 is inconvenient in that sufficient decalcification may not be possible. The liquid phase decalcification time will vary with the pH and the processing temperature, and is not particularly limited, but the lower limit is preferably 1 min, more preferably 5 min, and even more preferably 10 min. The upper limit is preferably 300 min, more preferably 200 min, and even more preferably 150 min. If short, sufficient decalcification is not possible, and if long, is inconvenient from the side of working efficiency. The liquid phase decalcification can be carried out with a temperature which is not particularly limited within a wide range of 0°C to 100°C. In the case that the decalcification temperature is lower than 0°C, the diffusion of the acid becomes slow, and the efficiency of the decalcification becomes low, which is not preferable. When higher than 100°C, the practical facilities are restricted by the occurrence of evaporation of the acid and the like, which is not preferable.

(Preparation Step of the Char from the Plant Raw Material)

The plant which becomes the carbon source of the plant-derived char is at least one plant selected from the group consisting of coconut shells, coffee beans, tea leaves, sugar cane, straw, broad-leaf trees, conifers, bamboo, or rice husks. These plants may be used individually or in combinations of two or more, and coconut shells or coffee beans are particularly preferable because they can be obtained in large quantities. The coconut raw material for the coconut shells is not particularly limited, and palms (oil palms), coconut palms, salak, or sea coconuts may be mentioned. As the carbon source using the coffee beans, extraction residue from which a coffee beverage component has been extracted from the coffee beans is preferable.

The method of producing a char from the plant material is not particularly limited, and for example, it may be produced by preliminary firing at 300°C to 550°C under an inert atmosphere. The temperature of the preliminary firing in the case of producing a char is preferably 350 to 500°C, more preferably 375 to 450°C. The preliminary firing is preferably carried out under a nonoxidative gas atmosphere. As the nonoxidative gas, helium, nitrogen, argon or the like may be mentioned, and these may be used individually or in combination.

(Gas Phase Decalcification Step)

The plant derived raw material contains many metal elements, and in particular, much potassium and iron are contained. If a carbonaceous material including large amounts of metal elements is used as a negative electrode, this will exert a non-preferable influence on the electrochemical characteristics and stability. Accordingly, the content of potassium element or iron element of the carbonaceous material for negative electrode is preferably made as low as possible. Accordingly, it is preferable to carry out the above mentioned liquid phase decalcification step or gas phase decalcification step. However, even if a liquid phase decalcification step or gas phase decalcification step is not performed, it is possible to obtain the carbonaceous material of the present invention.

A halogen compound used in the gas phase decalcification is not particularly limited, and for example, florine, chlorine, bromine, iodine, hydrogen fluoride, hydrogen chloride, hydrogen bromide, iodine bromide, chlorine fluoride (ClF), iodine chloride (ICl), iodine bromide (IBr), bromine chloride (BrCl) and the like, or compounds which generate these halogen compounds by thermal decomposition, or their mixtures may be mentioned, and hydrogen chloride is preferable. Further, the halogen compounds my be used mixed with an inert gas, and the mixed inert gas is not particularly limited provided that it does not react with the carbonaceous material at the above mentioned processing temperature, and for example, nitrogen, helium, argon, kyropton, or mixtures thereof may be mentioned, and nitrogen is preferable.

The temperature of the gas phase decalcification is 500°C to 1250°C, preferably 600°C to 1100°C, more preferably 700°C to 1000°C, and even more preferably 800°C to 950°C. If less than 500°C, the decalcification efficiency is reduced, and it the decalcification may be insufficient, and if more than 1250°C, activation by the halogen compound may occur.

Further, the time of the gas phase calcification is not particularly limited, and is preferably 5 min to 300 min, more preferably 10 min to 200 min, and even more preferably 20 min to 150 min. For the temperature and time and the like of the gas phase decalcification, the higher the temperature the more the decalcification proceeds, and the longer the time, the more the decalcification proceeds. Accordingly, it is preferable to carry out the gas phase decalcification at a temperature and time such that the potassium content becomes 0.1 mass5 or less.

(Alkali Impregnation Step)

By carrying out alkali impregnation, and after this carrying out a preliminary firing or gas phase decalcification, it is possible to obtain a carbonaceous material with an optimal pore structure. The plant derived raw material which is alkali impregnated is not particularly limited, and is preferably a plant-derived char. Namely, a char produced by the preparation step of a char from the above described plant raw material is preferable.

The alkali impregnation step is a step wherein a compound comprising an alkali metal element is added to the plant-derived char, heat treatment is carried out at 500°C to 1000°C in a nonoxidizing gas atmosphere, and an alkali treated carbonaceous material precursor is obtained. As the alkali metal element, an alkali metal element such as lithium, sodium, calcium, or the like may be used. The alkali metal element may be impregnated into the plant derived char in the form of a metal, but it may also be impregnated as a compound comprising an alkali metal element such as hydroxide, carbonate, bicarbonate, or halogen compound or the like (below, referred to as an alkali metal compound). The alkali metal compound, is not particularly limited, and a hydroxide is preferable because it has a high permeability, and can be uniformly impregnated in the plant derived char.

<<Crushing Step>>

The crushing step is a step of crushing the carbon precursor. In the carbonaceous material, in order to increase the region which can be doped and de-doped with sodium, it is preferable to make the particle diameter small. The timing of the crushing is not particularly limited, but is preferably before the main firing. The carbonaceous precursor may be crushed before the preliminary firing, but the carbonaceous precursor may fuse during the firing. Further, it may be carried out after the main firing, but if a carbonization reaction proceeds the carbonaceous precursor will become hard, and therefore, it will be difficult to control the particle diameter distribution by crushing. By crushing, it is possible to make the average particle diameter of the carbonaceous material of the present invention 1 to 50 $\mu$m.
The crushing apparatus used in the crushing is not particularly limited, and for example, a jet mill, rod mill, vibrating ball mill, or hammer mill may be used, but a jet mill provided with a classifier is preferable.

(Preliminary Firing Step)

The preliminary firing is carried out, for example by firing the carbon source at 300°C to less than 900°C. The preliminary firing eliminates volatile components such as $CO_2$ CO, $CH_4$, $H_2$ and the like, and a tar component, and the generation of these components in the main firing is reduced, which can reduce the burden on the firing vessel. If the preliminary firing is less than 300°C, the de-tarring is insufficient, and there will be much tar component and gas generated in the main firing step after the crushing, and there is the possibility that these will adhere to the particle surfaces, and when crushed they will be retained on the surface texture and will trigger a degradation of the electrical performance, which is not preferable. On the other hand, if the preliminary firing temperature is 900°C or more, the tar generation temperature range is exceeded, and the efficiency of use of energy is reduced, which is not preferable. Furthermore, the generated tar may triggers a secondary decomposition reaction, and this will adhere to the carbonaceous precursor, which will trigger a degradation in performance, which is not preferable. The preliminary firing is carried out in an inert gas atmosphere, and as the inert gas, nitrogen or argon or the like may be mentioned. Further, the preliminary firing may be carried out under reduced pressure, for example, it may be carried out at 10 KPa or less. The time for the preliminary firing is not particularly limited, but for example, it may be carried out for 0.5 to 10 hr, more preferably 1 to 5 hr. Further, in the present invention, by the "preparation step of the plant raw material" or the "gas phase decalcification step" or the like, the effect of the preliminary firing may be obtained.

(Main Firing Step)

The main firing step is a step of main firing of the carbonaceous precursor. By carrying out the main firing step, it is possible to obtain the carbonaceous material for a sodium ion secondary battery. The temperature of the main firing step is 800 to 1500°C. The lower limit of the main firing temperature of the present invention is 800°C or more, more preferably 1100°C, and particularly preferably 1150°C. If the heat treatment temperature is too low, the carbonization is insufficient, many functional groups will remain in the carbonaceous material and the value of H/C will become high, and there will be an increase in irreversible capacity due to reactions with sodium. On the other hand, the upper limit of the main firing temperature of the present invention is 1500°C. If the main firing temperature exceeds 1500°C, the cavities formed as storage sites for sodium will decrease, and the doping and de-doping capacity will decrease. Namely, the selective orientation of the carbon hexagonal plane is increased, and the discharge capacity will be reduced. By mixing an organic material such as a resin or the like before the main firing, the specific surface area increase by generation of a gas during heating can be controlled. Further, as disclosed in Example 5, the main firing can also be carried out with the addition of a polystyrene or the like to the carbonaceous precursor. The vaporized polystyrene or the like will coat the carbonaceous precursor, and it is possible to control the specific surface area.

The main firing is preferably carried out in an non-oxidizing gas atmosphere. As the non-oxidizing gas, helium, nitrogen, or argon or the like may be mentioned, and these may be used individually or in combination. Further, it is also possible to carry out the main firing in a gas atmosphere where a halogen gas such as chlorine or the like is mixed with the above mentioned non-oxidizing atmosphere. Further, the main firing may be carried out under reduced pressure, for example, 20 kPa or less. The time of the main firing is not particularly limited, and for example, it may be carried out for 0.1 to 10 hr, preferably 0.3 to 8 hr, and even more preferably 0.4 to 6 hr.

(Coating Step by Pyrolytic Carbon)

The coating by pyrolytic carbon may utilize a CVD method. Specifically, the fired matter is made to contact a straight chain or cyclic hydrocarbon gas, and carbon purified by decomposition is deposited on the fired matter. This method is the so-called chemical vapor deposition (CVD) method, and is a well-known method. By the coating step by pyrolytic carbon, the specific surface area of the obtained carbonaceous material can be controlled. The pyrolytic carbon used in the present invention is one which can be heated as a hydrocarbon gas, and provided that it is one which can reduce the specific surface area of the carbonaceous material, it is not particularly limited. The hydrocarbon gas is preferably mixed with a non-oxidizing gas, and is contacted with the carbonaceous material. The carbon source of the hydrocarbon is not particularly limited, and for example, methane, ethane, propane, butane, pentane, hexane, octane, nonane, decane, ethylene, propylene, butene, pentene, hexene, acetylene, cyclopentane, cyclohexane, cycloheptane, cyclooctane, cyclononane, cyclopropane, cylcopentene, cyclohexene, cycloheptene, cyclooctene, decalin, norbornene, methylcyclohexane, norbornadiene, benzene, toluene, xylene, mesitylene, cumene, butylbenzene or styrene may be mentioned. Further, as the carbon source of the pyrolytic carbon, a gaseous organic substance, and an organic solid or liquid which is heated, and a generated hydrocarbon may be used.

[2] Negative Electrode for Sodium Ion Secondary Battery

<<Production of the Negative Electrode>>

The negative electrode using the carbonaceous material of the present invention may be produced by adding a binder to the carbonaceous material, adding a suitable amount to a suitable solvent, mixing, and after making the electrode mixture, coating on a current collector consisting of a metal plate or the like, and after drying, pressure forming. By using the carbonaceous material of the present invention it is possible to produce an electrode having high electrical conductivity without adding a particular conduction auxiliary, but when preparing the negative electrode mixture, it is possible to add a conducting auxiliary as required with the objective of endow even higher electrical conductivity. As the conductive auxiliary, acetylene black, Ketjen black, carbon nanofibers, carbon nanotubes, or carbon fibers or the like may be used, and the added amount will vary depending on the type of conductive auxiliary used, but if the added amount is too small, the expected electrical conductivity cannot be obtained which is not preferable, and if too much, the distribution within the electrode mixture become poor, which is also not preferable. From such a point of view, a preferred proportion of the added conductive auxiliary is 0.5 to 15 mass% (herein, active substance (carbonaceous material) amount + binder amount + conductive auxiliary = 100 mass%), more preferably 0.5 to 7 mass%, particularly preferably 0.5 to 5 mass%. The binder is not particularly limited, provided that it is one which does not react with the electrolyte, such as PVDF (polyvinylidene fluoride), polytetrafluoroethylene, and mixtures of SBR (styrene·butadiene·rubber) and CMC (carboxymethyl cellulose) and the like. Among these, PVDF adhered to the active material surface produces less inhibition of sodium ion movement, and therefore PVDF is preferable because favorable input and output characteristics can be obtained. In order to form a slurry in which PVDF is dissolved, a polar solvent such as N-methylpyrrolidone is preferably used, but it is also possible to use an aqueous emulsion such as SBR or the like, or CMC dissolved in water. If the added amount of the binder is too large, the resistance of the obtained electrode will become large, therefore, the internal resistance of the battery will become large, and the performance of the battery will decrease, which is not preferable. Further, if the added amount of the binder is too small, the binding of the negative electrode material particles to each other or to the current collector will be insufficient, which is not preferable. A preferred added amount of the binder will vary depending on the type of binder used, but for a PVDF type binder is preferably 3 to 13 mass%, and more preferably 3 to 10 mass%. On the other hand, for a binder using water as the solvent, the use of a mixture of a plurality of binders, such as a mixture of SBR and CMC or the like is common, and as the total amount of all binders used, 0.5 to 5 mass% is preferable, and more preferably 1 to 4 mass%. It is standard to form the electrode active material layer on both faces of a current collector, but it may also be on one face as required. The thicker the electrode active material layer, the less the current collector or separator or the like, which is preferable for increasing the capacity, but the larger the surface area facing the counter electrode, the more advantageous for increasing the input and output characteristics, if the acrive material later is too thin, the input and output characteristics will be degraded which is not preferable. A preferable thickness of the active material layer (per single face) is not particularly limited, and may be in a range of 10 $\mu$m to 1000 $\mu$m, preferably 10 to 80 $\mu$m, more preferably 20 to 75 $\mu$m, particularly preferably 20 to 60 $\mu$m. The negative electrode has a conventional collector. As the negative electrode collector, for example, SUS, copper, aluminum, nickel or carbon may be used, and among these, copper or SUS are preferable.

[3] Sodium Ion Secondary Battery

In the case of forming a negative electrode of a sodium ion secondary battery using the negative electrode material of the present invention, the other materials constituting the battery such as the positive electrode, separator, and negative electrode and the like are not particularly limited, and it is possible to use materials which have been conventionally used in sodium ion secondary batteries, or various materials which have been proposed.

(Positive Electrode)

The positive electrode comprises a positive electrode active material, and may further comprise a conductive auxiliary, binder or both. The mixing ratio of the positive electrode active material in the positive electrode material layer and the other materials is not limited provided that the effects of the present invention can be obtained, and may be suitably determined. As the positive electrode active material, a positive electrode active material which can dope and de-dope sodium ions can be used without limitations. For example, as the positive electrode active material, compounds represented by $NaFeO_2$, $NaNiO_2$, $NaCoO_2$, $NaMnO_2$, $NaFe_{1-x}M1_xO_2$, $NaNi_{1-x}M1_xO_2$, $NaCo_{1-x}M1_xO_2$, $NaMn_{1-x}M1_xO_2$ (wherein M1 is at least one element selected from the group consisting of trivalent metals, $0 \leq x \leq 0.5$), $Na_bM2_cSi_{12}O_{30}$ (M2 is one or more transition metal elements, $2 \leq b \leq 6$, $2 \leq c \leq 5$; for example, $Na_6Fe_2Si_2O_{30}$ or $Na_2Fe_5Si_{12}O_{30}$), $Na_dM3_eSi_6O_{18}$ (M3 is one or more transition metal elements, $3 \leq d \leq 6$, $1 \leq e \leq 2$; for example, $Na_2Fe_2Si_6O_{18}$ or $Na_2MnFeSi_6O_{18}$), $Na_fM4_gSi_2O_6$ (M4 is a transition metal element, an element of one or more selected from the group of Mg and Al, $1 \leq f \leq 2$, $1 \leq g \leq 2$; for example, $Na_2FeSi_2O_6$), phosphates (for example, $NaFePO_4$, $Na_3Fe_2(PO_4)_3$), borates (for example, $NaFeBO_4$, or $Na_3Fe_2(BO_4)_3$), $Na_hM5F_6$ (M5 is 1 or more transition metal elements, $2 \leq h \leq 3$; for example, $Na_3FeF_6$ or $Na_2MnF_6$) may be mentioned.

The positive electrode may further include a conductive auxiliary and/or a binder. As the conductive auxiliary, for example, acetylene black, Ketjen black, or carbon fibers may be mentioned. The content of the conductive auxiliary is not particularly limited, and for example is 0.5 to 15 mass%. Further, as the binder, for example, fluorine-containing binders such as PTFE or PVDF or the like may be mentioned.

The content of the conductive auxiliary is not particularly limited, and for example is 0.5 to 15 mass%. Further, the thickness of the positive electrode active material layer is not limited, and for example is within a range of 10 $\mu$m to 1000 $\mu$m. The positive electrode active material layer has a conventional collector. As the negative electrode collector, for example, SUS, aluminum, nickel, iron, titanium and carbon may be used, and among these, aluminum or SUS are preferable.

(Electrolyte)

The non-aqueous solvent type electrolyte used in combination with these positive electrodes and negative electrodes is generally formed by dissolving an electrolyte substance in a non-aqueous solvent. However, it is not limited within the limitations of obtaining the effects of the present invention, and for example an ionic liquid may be used. As the non-aqueous solvent, for example, one or combinations of two or more more organic solvents such as propylene carbonate, ethylene carbonate, dimethyl carbonate, diethyl carbonate, dimethoxyethane, diethoxyethane, $\gamma$-butyl lactone, tetrahydrofuran, 2-methyl tetrahydrofuran, sulfolane, or 1,3-dioxolane or the like may be used. Further, as the electrolyte material, $CaClO_4$, $NaPF_6$, $NaBF_4$, $NaCF_3SO_3$, $NaN(CF_3SO_2)_2$, $NaN(FSO_2)_2$, $NaC(CF_3SO_2)_3$, $NaAsF_6$, $NaPF_6$, $NaB(C_6H_5)_4$, $CH_3SO_3Na$, $CF_3SO_3Na$, $NaCl$, or $NaBR$ may be mentioned. The secondary battery is generally formed by opposing the positive electrode and negative electrode formed as described above, if necessary via a liquid-permeable separator consisting of a fabric or other porous material, and immersing in the electrolyte solution. As the separator, a liquid-permeable separator consisting of a fabric or other porous material commonly used in secondary batteries may be used. Or a solid electrolyte material consisting of a gel impregnated with an electrolyte may be used instead of a separator, or together with a separator.

EXAMPLES

Below, the present invention is specifically explained by examples, but the present invention is not limited to the scope of these examples. Further, measurement methods of the below physical properties of the carbonaceous material ("atom ratio (H/C) of hydrogen atoms / carbon atoms", "butanol true density", "helium true density", "average particle diameter", "specific surface area", and "average lattice spacing $d_{002}$") are disclosed, and these physical properties disclosed throughout the specification are ones based on the valued determined by the below described methods.

<<Atom Ratio (H/C) of Hydrogen Atoms and Carbon Atoms>>

Measured in conformity with the method prescribed in JIS M8819. The ratio of the atom number of hydrogen atoms / carbon atoms was determined from the mass ratio of hydrogen and carbon in a sample obtained by elemental analysis by a CHN analyzer.

<<Butanol True Density>>

Measured using butanol, in conformity with the method prescribed in JIS R7212. An outline is described below. Further, both the carbonaceous precursor and the carbonaceous material were measured by the same measurement method. The weight ($m_1$) of a specific density bottle with a bypass tube with an internal capacity of about 40 mL was accurately weighed. Next, after introducing to the base thereof a sample so as to be flat with a thickness of about 10 mm, the weight ($m_2$) was accurately weighed. To this, 1-butanol was gently added, to a depth on the order of 20 mm from the floor. Next, a light oscillation was applied to the specific density bottle, and after confirming that there was no generation of large bubbles, it was inserted into a vacuum desiccator, and gradually evacuated to 2.0 to 2.7 kPa. It was held at 20 min or more at this pressure, and after the generation of bubbles had stopped, it was removed, and filled with more 1-butanol, closed and immersed for 15 min or more in a thermobath (adjusted to 30 $\pm$ 0.03°C), and the level of the 1-butanol was benchmarked. Next, this was removed, the exterior was wiped well, and after cooling to room temperature, the weight ($m_4$) was accurately weighed. Next, the same specific density bottle was filled with only 1-butanol, immersed in the same thermobath, and after benchmarking, the weight ($m_3$) was weighed. Further, distilled water which was boiled immediately before use to eliminate dissolved gases was put into the specific density bottle, and it was immersed in a thermobath in the same way as before, and after benchmarking, the weight ($m_5$) was weighed. The true density ($\rho_{Bt}$) was calculated by the following formula.

[Formula 1]

$$\rho_{Bt} = \frac{m_2 - m_1}{m_2 - m_1 - (m_4 - m_3)} \times \frac{m_3 - m_1}{m_5 - m_1} d$$

(Herein, d is the specific gravity of water at 30°C (0.9946).)

<<Average Particle Diameter>>

To a sample of about 0.1 g, 3 drops of a dispersant (cationic surfactant "SN Wet 366" (made by San Nopco Limited)) was added, and the dispersant was closely mixed with the sample. Next, 30 mL of pure water was added, and after dispersing for about 3 min in an ultrasonic cleaner, the particle diameter distribution of a particle diameter range of 0.02 to 2000 $\mu$m was determined using a particle diameter measurement device (Microtrac MT3300 EX II made by Nikkiso Co., Ltd.). From the obtained particle diameter distribution, the particle diameter where the cumulative volume was 50% was taken as the average particle diameter $D_{v50}$ ($\mu$m).

<<Helium True Density>>

The measurement of the true density $\rho_{He}$ with helium as a substitute atmosphere was carried out using a multivolume pycnometer made by Micromeritics Instrument Corp. (Accupeak 1330), after the sample was dried for 12 hr in a vacuum at 200°C. The ambient temperature while measuring was set at 25°C. All of the pressures in the present measurement method are gauge pressures, and are pressures where the ambient pressure was subtracted from the absolute pressure. The multivolume pycnometer made by Micromeritics Instrument Corp. is equipped with a sample chamber and an expansion camber, and is provided with a pressure gauge for measuring the pressure inside the sample camber. The sample chamber and expansion camber are connected by a connection pipe provided with a valve. The sample chamber is connected to a helium gas introduction pipe provided with a stop valve, and the expansion chamber is connected to a helium gas extraction pipe provided with a stop valve. The measurement was carried out as below. The volume of the sample chamber ($V_{CELL}$) and the volume of the expansion chamber ($V_{EXP}$) were measured in advance using a bogey tube. The sample was introduced into the sample chamber, and helium gas was substituted inside the device by flowing helium gas for 2 hr through the helium gas introduction pipe of the sample chamber, the connection pipe, and the helium gas extraction pipe of the expansion chamber. Next, the valve between the sample chamber and expansion chamber, and the valve of the helium gas extraction pipe from the expansion chamber were closed (helium gas at the same pressure as the ambient pressure remained in the expansion chamber), and after introducing helium gas from the helium gas introduction pipe of the sample chamber until the pressure became 134 kPa, the stop valve of the helium gas introduction pipe was closed. The pressure ($P_1$) of the sample chamber was measured 5 min after the closing of the stop valve. Next, the valve between the sample chamber and the expansion chamber was opened, the helium gas was transferred to the expansion chamber, and the pressure at this time ($P_2$) was measured. The volume of the sample ($V_{SAMP}$) was calculated by the following formula. $V_{SAMP}=V_{CELL}-V_{EXP}/[(P_1/P_2)-1]$

Accordingly, if the mass of the sample is $W_{SAMP}$, the helium true density is $\rho_{He} = W_{SAMP}/V_{SAMP}$. The setting of the balance speed was set at 0.010 psig/min.

<<Specific Surface Area>>

The specific surface area was measured in conformity with the method prescribed in JIS Z8830. An outline is described below. $v_m$ was determined by a 1 point method (relative pressure x = 0.2) by nitrogen absorption at liquid nitrogen temperature, using an approximation derived from the BET formula

[Formula 2]
$$v_m = 1/(v(1-x))$$

and the specific surface area of the sample was calculated by the following formula: specific surface area = 4.35 x $v_m$ (m²/g) (herein, $v_m$ is the absorption amount (cm³/g) required to form a single atomic layer at the sample surface, v is the actually measured absorption amount (cm³/g), and x is the relative pressure.) Specifically, the absorbed amount of nitrogen for the carbonaceous material at liquid nitrogen temperature was measured using a "Flow Sorb II2300" by Micromeritics Instrument Corp., as below. The carbonaceous material was filled into a sample tube, and while flowing a helium gas comprising 20 mol% nitrogen gas, the sample tube was cooled to -196°C, and nitrogen was absorbed onto the carbonaceous material. Next, the sample tube was returned to room temperature. At this time, the nitrogen amount desorbed from the sample was measured with a thermal conductivity detector, and taken as the absorbed gas amount.

(Average Lattice Spacing $d_{002}$ of the Carbonaceous Material)

A carbonaceous material powder was filled into a sample holder, and measured by the symmetric reflection method using an X'Pert PRO made by PANalytical. Under conditions of a scanning range of 8 < 2θ < 50° and applied current/applied voltage of 45kV/40 mA, with a line source of a CuK α line (λ = 1.5418 Å) monochromatized by an Ni filter, the X ray diffraction pattern was obtained. Calibration was carried out using a diffraction peak of the (111) face of high purity silicon powder used as a standard. The wavelength of the CuK α line was taken as 0.15418 nm, and $d_{002}$ was calculated by the Bragg formula.

<<Example 1 (Reference Example)>> Coconut shells were crushed, carbonized at 500°C, and a coconut shell char with a particle diameter of 2.360 - 0.850 mm was obtained (particles of a particle diameter of 2.360-0.850 mm comprising 98 mass%). To 100 g of the coconut shell char, a flow amount of 10 L/min of nitrogen gas comprising 1 vol% hydrogen chloride gas was fed, and processed at 950°C for 80 min. After this, the feed of hydrogen chloride gas only was stopped, further heat treatment was performed at 950°C for 30 min, and a coconut shell char carbonaceous precursor was obtained. The obtained coconut shell char carbonaceous precursor was coarsely crushed to an average particle diameter of 8 μm in a ball mill, and after this, was crushed and classified in a compact jet mill (Cojet System α-mk III), 10 g of the powdered coconut shell char carbonaceous precursor was placed in a horizontal tubular furnace, a main firing was carried out for 1 hr at 1100°C under a nitrogen atmosphere, and a carbonaceous material for a sodium ion secondary battery negative electrode with an average particle diameter of 5 μm was obtained. Further, the main firing was carried out under a nitrogen atmosphere with a flow rate of 10 L/min. The properties of the obtained carbonaceous material are shown in Table 1.

<<Example 2>>

A carbonaceous material was obtained by repeating the same operations as Example 1, except that the main firing temperature was 1250°C.

<<Example 3>>

A carbonaceous material was obtained by repeating the same operations as Example 1, except that the main firing temperature was 1450°C.

<<Example 4>>

A carbonaceous material was obtained by repeating the same operations as Example 1, except that the average particle diameter was made 9 $\mu$m, and the main firing temperature was 1450°C.

<<Example 5>>

A carbonaceous material was obtained by repeating the same operations as Example 1, except that the coconut shell char carbonaceous precursor was mixed with polystyrene with a mass ratio of 90/10 before the main firing, and the main firing temperature was 1250°C.

<<Example 6>>

A carbonaceous precursor impregnated with 20 mass% NaOH with respect to the coconut shell char was obtained by adding and impregnating a sodium hydroxide (NaOH) solution under a nitrogen atmosphere to a coconut shell char with a particle diameter of 200 $\mu$m (carbonization at 500°C), and then carrying out reduced pressure heating dehydration. Next, 10 g of the carbonaceous precursor impregnated with NaOH was heat treated at 800°C in a nitrogen atmosphere and after this, the nitrogen gas flowing through the reaction tube was replaced with a mixed gas of chlorine gas and nitrogen gas, and held at 860°C for 1 hr. Next, the flow of chlorine gas was stopped, and it was held for 30 min under a nitrogen atmosphere, and a coconut shell fired carbon was obtained. 200 g of the obtained coconut shell crushed carbon was crushed for 20 min by a jet mill (Hosokawa Micron Corp., Air Jet Mill, Model 100AFG), and a crushed carbonaceous precursor with an average particle diameter of 18 to 23 $\mu$m was obtained. The crushed carbonaceous precursor was heated to 1200°C with a temperature increase speed of 250°C/h, held at 1200°C for 1 hr, whereby the main firing was performed, and a fired carbon was obtained. Further, the main firing was carried out under a nitrogen atmosphere with a flow rate of 10 L/min. 5 g of the obtained fired carbon was placed in a quartz reaction tube, heated and held under a nitrogen gas flow at 780°C, and after this the nitrogen gas flowing through the reaction tube was replaced with a mixed gas of hexane and nitrogen gas, whereby coating of the fired carbon was carried out by pyrolytic carbon. The injection rate of the hexane was 0.3 g/min, and after injecting for 30 min, the feed of hexane was stopped, the gas in the reaction tube was replaced with nitrogen, then cooled, and carbonaceous material 6 was obtained.

<<Example 7>>

To 1000 g of coffee residue after extraction, 3000 g of 1% hydrochloric acid was added, and after stirring for 10 min at room temperature, was filtered. Next, 3000 g of water was added, and after stirring for 10 min, was filtered, a washing operation with water was repeated 3 times, and after this decalcification treated, and a decalcified coffee extract residue was obtained. The obtained decalcified coffee extract residue was dried in a nitrogen gas atmosphere, and then, a preliminary firing was carried out at 400°C, and a coffee char was obtained. The coffee char was crushed in a rod mill to a particle diameter of 20 $\mu$m, a sodium hydroxide (NaOH) aqueous solution was added and impregnated in a nitrogen atmosphere, and then, this was heated and dehydration treated at 120°C, whereby a carbonaceous precursor impregnated with 15 mass% NaOH with respect to the coffee char was obtained. Next, the carbonaceous precursor impregnated with NaOH was heat treated at 800°C in a nitrogen atmosphere, and after this, the nitrogen gas flowing in the reaction tube was replaced with a mixed gas of chlorine gas and nitrogen gas, and held at 860°C for 1 hr. Next, the flow fo chlorine gas was stopped, and it was held under a nitrogen atmosphere for 30 min , and a carbonaceous precursor was obtained. The crushed carbonaceous precursor was heated to 1200°C with a temperature increase speed of 250°C/h, held at 1200°C for 1 hr, whereby the main firing was performed, and a fired carbon was obtained. Further, the main firing was carried out under a nitrogen atmosphere with a flow rate of 10 L/min. 5 g of the obtained fired carbon was placed in a quartz reaction tube, heated and held under a nitrogen gas flow at 780°C, and after this the nitrogen gas flowing through the reaction tube was replaced with a mixed gas of hexane and nitrogen gas, whereby coating of the fired carbon was carried out by pyrolytic carbon. The injection rate of the hexane was 0.3 g/min, and after injecting for 30 min, the feed of hexane was stopped, the gas in the reaction tube was replaced with nitrogen, then cooled, and carbonaceous material 7 was obtained.

<<Example 8>>

A carbonaceous material was obtained by repeating the same operations as Example 1, except for 20 g of the powdered coconut shell char carbonaceous precursor, and a flow rate of nitrogen of 2 L/min in the main firing.

<<Example 9>>

A carbonaceous material was obtained by repeating the same operations as Example 4, except for 20 g of the powdered coconut shell char carbonaceous precursor, and a flow rate of nitrogen of 2 L/min in the main firing.

<<Comparative Example 1>>

A carbonaceous material was obtained by repeating the same operations as Example 1, except that the main firing temperature was 1000°C.

Using the carbonaceous materials of the examples and comparative examples, negative electrodes and sodium ion secondary batteries were prepared as below, and the electrode performance was evaluated.

(a) Preparation of Electrodes

To 94 parts by mass of the above carbonaceous material, and 6 parts by mass of polyvinylidene fluoride ("KF #9100" made by Kureha K.K.), NMP was added and a paste was formed, and this was uniformly coated on a copper foil. After drying, discs with a diameter of 15 mm were stamped from the copper foil, and there were pressed to make electrodes. Further, this was prepared so that the mass of the carbonaceous material in the electrodes was about 10 mg.

(b) Preparation of the Test Batteries

The carbonaceous material of the present invention is suitable for constituting the negative electrodes of non-aqueous electrolyte secondary batteries, but in order to precisely evaluate the discharge capacity (de-doping amount) and irreversible capacity (non-de-doping amount) of the battery active material without influence from the disparity in performance of the counter electrode, a sodium secondary battery was constituted using sodium metal which has stable characteristics as the counter electrode, and the electrode obtained as described above, and its characteristics were evaluated. The preparation of the sodium electrode was carried out in a glove box in an Ar atmosphere. After spot welding a stainless steel mesh disc with a diameter of 15 mm to the outer lid of a can for coin-type batteries of a 2016 size, a metallic sodium thin plate with a thickness of 0.8 mm was punched with a diameter of 15 mm and contact bonded to the stainless steel mesh disc, as the electrode (counter electrode). Using a pair of electrodes produced in this way, and using propylene carbonate to which $NaPF_6$ was added in a ratio of 1.0 mol/L, and with a microporous membrane made of borosilicate glass fibers with a diameter of 19 mm as a separator, and using a polyethylene gasket, a 2016 size coin-type non-aqueous electrolyte sodium ion secondary battery was assembled in an Ar glove box.

(c) Measurement of the Battery Capacity

For the above constituted sodium ion secondary battery, electric charging and discharging tests were carried out using a charging and discharging test device ("TOSCAT" made by Toyo Systems Co., Ltd.). The doping reaction of the sodium in the carbon electrode was carried out by a constant current constant voltage method, and the de-doping reaction was carried out by a constant current method. Herein, the doping reaction of the sodium in the carbon electrode is referred to as "charging" for convenience. On the contrary, "discharging" is a charging reaction in the test battery, but the de-doping reaction of sodium from the carbonaceous material is referred to as "discharging" for convenience. The charing method applied herein is a constant current constant voltage method, and specifically, constant current charging is carried out at a current density of 0.1 mA/cm² until the terminal voltage becomes 0 mV, and after the terminal voltage has reached 0 mV, constant voltage charging is carried out at a terminal voltage of 0 mV, and the chariging is continued until the current value becomes 20 μA. The value of the electric charge supplied at this time divided by the mass of the carbonaceous material of the electrode is defined as the charge capacity (mAh/g) per unit mass of the carbonaceous material. After the conclusion of the charging, the circuit of the battery is opened for 30 min, and after this, de-doping of sodium from the carbonaceous material was carried out. De-doping is carried out at a current density of 0.1 mA/cm², and the termination voltage was 1.5 V. The value of the electric charge at this time divided by the mass of the carbonaceous material is defined as the discharge capacity (mAh/g) per unit mass of the carbonaceous material. Moreover, the irreversible capacity is defined as the difference between the charge capacity and the discharge capacity. The value of the discharge capacity divided by the charge capacity, multiplied by 100, is the efficiency (%). The measurement is carried out at 25°C, and the charge discharge capacity, irreversible capacity, and efficiency are the averages of n = 3 measured values for test batteries produced using the same samples.

[Table 1]

| | Raw material | SSA m$^2$/g | $\rho_{Bt}$ g/cm$^3$ | $\rho_{He}$ g/cm$^3$ | H/C | d$_{002}$ nm | Charge mAh/g | Discharge mAh/g | Irreversible mAh/g | Efficiency % |
|---|---|---|---|---|---|---|---|---|---|---|
| Example 1* | coconut shells | 45 | 1.48 | 2.16 | 0.04 | 0.386 | 323 | 280 | 43 | 87 |
| Example 2 | coconut shells | 10 | 1.45 | 2.12 | 0.02 | 0.383 | 335 | 303 | 32 | 90 |
| Example 3 | coconut shells | 8 | 1.43 | 2.05 | 0.01 | 0.376 | 330 | 305 | 25 | 92 |
| Example 4 | coconut shells | 7 | 1.43 | 2.04 | 0.02 | 0.379 | 330 | 305 | 25 | 92 |
| Example 5 | coconut shells | 8 | 1.47 | 2.09 | 0.02 | 0.384 | 330 | 302 | 28 | 92 |
| Example 6 | coconut shells | 1.2 | 1.40 | 1.40 | 0.03 | NT | NT | NT | NT | NT |
| Example 7 | coffee | 1.1 | 1.43 | 1.65 | 0.03 | 0.389 | 337 | 299 | 38 | 89 |
| Example 8 | coconut shells | 6.2 | 1.44 | 2.04 | 0.01 | 0.385 | 323 | 295 | 28 | 91 |
| Example 9 | coconut shells | 4.4 | 1.43 | 1.99 | 0.01 | 0.378 | 327 | 304 | 23 | 93 |
| Comparative Example 1 | coconut shells | 119 | 1.48 | 2.05 | 0.08 | 0.387 | 315 | 264 | 51 | 84 |

NT : not tested
* Reference Example

The secondary batteries using the carbonaceous materials of Examples 1 to 9 which had a specific surface area of 100 $m^2$/g or less displayed excellent discharge capacity and charge capacity efficiency. On the other hand, the secondary batteries using the carbonaceous material of Comparative Example 1 (specific surface area: 119 m2/g) which had a specific surface area exceeding 100 $m^2$/g could not provide a high discharge capacity. Further, the test batteries for which the battery performance was measured are half cells using a sodium metal (counter electrode) and a carbon electrode comprising the carbonaceous material of the present invention. Accordingly, the above described test batteries (half cells) are not ones which have the constitution of the true cells (full cells) described in the above section "[3] Sodium Ion Secondary Battery". However, one skilled in the art will understand that it is possible to produce a full cell using the carbonaceous material of the present invention, from the disclosure of the section "[3] Sodium Ion Secondary Battery". Further, the battery performance of the half cells obtained in the present examples correlates with the battery performance of full cells.

A sodium ion secondary battery using the carbonaceous material according to the present invention has improved discharge capacity. A sodium ion secondary battery which uses sodium ions, for which resources are abundant, can be produced at low cost, thus the present invention is industrially useful. Further, the obtained sodium ion secondary battery can be effectively used for hybrid vehicles (HEV), plug-in hybrids (PHEV), and electric vehicles (EV).

**Claims**

1. A carbonaceous material for a sodium ion secondary battery negative electrode, **characterized in that** the carbonaceous material is derived from a plant as a carbon source, has a BET specific surface area of 100 $m^2$/g or less, and has a true density determined by the butanol method that is less than 1.53 g/$cm^3$, the plant is at least one plant selected from the group consisting of coconut shells, coffee beans, tea leaves, sugar cane, straw, broad leaf trees, conifers, bamboo, and rice husks, and the ratio H/C of hydrogen atoms to carbon atoms determined by elemental analysis is 0.03 or less.

2. A negative electrode for a sodium ion secondary battery comprising a carbonaceous material according to claim 1.

3. A sodium ion secondary battery comprising an electrode according to claim 2.

**Patentansprüche**

1. Kohlenstoffhaltiges Material für eine negative Elektrode einer Natriumionen-Sekundärbatterie, **dadurch gekennzeichnet, dass** das kohlenstoffhaltige Material von einem Pflanzenmaterial als einer Kohlenstoffquelle abgeleitet ist, eine spezifische BET Oberfläche von 100 $m^2$/g oder weniger aufweist und eine tatsächliche Dichte, bestimmt durch das Butanolverfahren, aufweist, welche weniger als 1,53 g/$cm^3$ ist, wobei das Pflanzenmaterial mindestens ein Pflanzenmaterial ist, ausgewählt aus der Gruppe, bestehend aus Kokosnußschalen, Kaffeebohnen, Teeblättern, Rohrzucker, Stroh, Laubbäumen, Nadelbäumen, Bambus und Reisspelzen, und das Verhältnis H/C von Wasserstoffatomen zu Kohlenstoffatomen, bestimmt durch Elementaranalyse, 0,03 oder weniger ist.

2. Negative Elektrode für eine Natriumionen-Sekundärbatterie, umfassend ein kohlenstoffhaltiges Material gemäß Anspruch 1.

3. Natriumionen-Sekundärbatterie, umfassend eine Elektrode gemäß Anspruch 2.

**Revendications**

1. Matière carbonée pour une électrode négative de batterie secondaire aux ions sodium, **caractérisée en ce que** la matière carbonée est dérivée d'une plante comme source de carbone, présente une surface spécifique BET de 100 $m^2$/g ou moins, et a une densité réelle déterminée par la méthode au butanol qui est inférieure à 1,53 g/$cm^3$, la plante est au moins une plante sélectionnée parmi le groupe consistant en coques de noix de coco, grains de café, feuilles de thé, canne à sucre, paille, arbres à feuilles larges, conifères, bambou et écorces de riz, et le rapport H/C des atomes d'hydrogène aux atomes de carbone déterminé par analyse élémentaire est de 0,03 ou moins.

2. Électrode négative pour une batterie secondaire aux ions sodium comprenant une matière carbonée selon la revendication 1.

**3.** Batterie secondaire aux ions sodium comprenant une électrode selon la revendication 2.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007035588 A
- JP 2010251283 A

- JP 2009129741 A
- JP 2015050050 A

**Non-patent literature cited in the description**

- **DING, J. et al.** describe carbon nanosheet frameworks derived from peat moss as high performance sodium ion battery anodes. *ACS Nano,* 2013, vol. 7 (12), 11004-11015